Europäisches Patentamt

European Patent Office

Office européen des brevets

(19)

(11) Veröffentlichungsnummer: **0 260 647 B1**

(12) # EUROPÄISCHE PATENTSCHRIFT

(45) Veröffentlichungstag der Patentschrift: **18.12.91**

(51) Int. Cl.⁵: **C08F 4/64**, C08F 10/02

(21) Anmeldenummer: **87113438.3**

(22) Anmeldetag: **15.09.87**

(54) **Verfahren zum Herstellen von Ethenpolymerisaten mittels eine s Ziegler-Katalysatorsystems.**

(30) Priorität: **17.09.86 DE 3631534**

(43) Veröffentlichungstag der Anmeldung:
**23.03.88 Patentblatt 88/12**

(45) Bekanntmachung des Hinweises auf die
Patenterteilung:
**18.12.91 Patentblatt 91/51**

(84) Benannte Vertragsstaaten:
**AT BE DE FR GB IT NL**

(56) Entgegenhaltungen:
**EP-A- 0 021 822**
**EP-A- 0 230 019**
**US-A- 2 887 471**

(73) Patentinhaber: **BASF Aktiengesellschaft**
**Carl-Bosch-Strasse 38**
**W-6700 Ludwigshafen(DE)**

(72) Erfinder: **Kerth, Jürgen, Dr.**
**Hardenburgstrasse 2**
**W-6701 Maxdorf(DE)**
Erfinder: **MÜller-Mall, Rudolf, Dr.**
**Ulmenweg 39**
**W-6708 Neuhofen(DE)**
Erfinder: **Schweier, Günther, Dr.**
**Friedrich-Pietzsch-Strasse 14**
**W-6701 Friedelsheim(DE)**

Rank Xerox (UK) Business Services

## Beschreibung

Die Erfindung liegt im Rahmen eines Verfahrens zum Herstellen kleinteiliger Homopolymerisate des Ethens oder Copolymerisate des Ethens mit unter geordneten Mengen $C_3$- bis $C_8$-, insbesondere $C_4$- bis $C_6$-alpha-Mono-alken durch Polymerisation des bzw. der Monomeren bei Temperaturen im Bereich von 30 bis 150, insbesondere 50 bis 120°C und Drücken im Bereich von 1 bis 200, insbesondere 5 bis 50 bar mittels eines Ziegler-Katalysatorsystems aus

(1) einer Titan enthaltenden Katalysatorkomponenteaus

(1.1) einem gefällten Produkt, das erhalten worden ist beim Erzeugen einer Fällung in einer vorgelegten organischen Flüssigkeit durch Ein- und Zusammenbringen unter kräftiger Bewegung

(1.1.1) einer 0,1 bis 10, insbesondere 1 bis 2 molaren Lösung von Titantetrachlorid in einem flüssig vorliegendem, 5 bis 10, insbesondere 6 bis 8 Kohlenstoffatome aufweisenden Kohlenwasserstoff gesättigt-aliphatischer und/oder aromatischer Natur,

(1.1.2) einer 0,1 bis 10, insbesondere 1 bis 2 molaren Lösung einer aluminiumorganischen Verbindung der Summenformel $R_nAlCl_{3-n}$, worin stehen n für eine Zahl im Bereich von 1,5 bis 3, insbesondere 1,5 bis 2 und R für eine Alkylgruppe, die 1 bis 12, insbesondere 2 bis 4 Kohlenstoffatome enthält, in einem flüssig vorliegendem, 5 bis 10, insbesondere 6 bis 8 Kohlenstoffatome aufweisenden Kohlenwasserstoff gesättigt-aliphatischer und/oder aromatischer Natur sowie

(1.1.3) eines $C_2$- bis $C_8$-, vorzugsweise $C_2$- bis $C_4$-alpha-Monoalkens, und insbesondere von Ethen, und

(2) einer Aluminium enthaltenden Katalysatorkomponente, die ein Trialkylaluminium ist, das pro Alkylgruppe 1 bis 12, insbesondere 2 bis 4 Kohlenstoffatome enthält,

mit der Maßgabe, daß das Atomverhältnis Titan aus der Katalysatorkomponente (1) : Aluminium aus der Katalysatorkomponente (2) im Bereich von 1 : 1 bis 1 : 200, insbesondere 1 : 5 bis 1 : 20, liegt.

Polymerisatsverfahren dieser Art sind bekannt, z.B. aus den US-PS 4 329 251 und 4 463 145.

Ein charakteristisches Merkmal jener Verfahrensart ist, daß Ziegler--Katalysatorsysteme eingesetzt werden, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichtes; - was für die technische Beherrschung der Polymerisationssysteme, die Aufbereitung der Polymerisate und/oder die Verarbeitbarkeit der Polymerisate von Bedeutung ist.

Die bekannten Polymerisationsverfahren der betroffenen Art haben - ebenso wie in Parallele zu setzende vergleichbare andere Polymerisationsverfahren - den Nachteil, daß die genannten Ziele unter bestimmten verfahrenstechnischen Bedingungen, z.B. Polymerisation in der Gasphase oder bei hohen Temperaturen, nicht befriedigend erreicht werden.

Die Aufgabe, die zur vorliegenden Erfindung geführt hat, bestand also darin, das eingangs beschriebene Verfahren so weiterzubilden, daß Polymerisate mit günstigen morphologischen Eigenschaften erhalten werden - insbesondere auch dann, wenn das Verfahren als Trockenphasen- Polymerisationsverfahren durchgeführt wird.

Es wurde gefunden, daß die gestellte Aufgabe gelöst werden kann, wenn man bei dem eingangs definierten Polymerisationsverfahren ein Ziegler-Katalysatorsystemeinsetzt, dessen Titan enthaltende Katalysatorkomponente (1) eine solche ist, bei deren Herstellung (1.1) die Fällung erzeugt worden ist bei relativ tiefen Temperaturen in einer relativ hochviskosen, vorgelegten Flüssigkeit aus (a) einem flüssigen Kohlenwasserstoff sowie (b) einem darin gelösten alpha-Monoalken-Polymerisat unter Vorgabe spezifischer Mengen- und Mengen/Zeit-Relationen, und (1.2) das gemäß (1.1) erhaltene gefällte Produkt mit einem Lithiumalkyl umgesetzt worden ist.

Gegenstand der vorliegenden Erfindung ist dementsprechend ein Verfahren zum Herstellen kleinteiliger Homopolymerisate des Ethens oder Copolymerisate des Ethens mit untergeordneten Mengen $C_3$- bis $C_8$-, insbesondere $C_4$-bis $C_6$-alpha-Monoalken durch Polymerisation des bzw. der Monomeren bei Temperaturen im Bereich von 30 bis 150, insbesondere 50 bis 120°C und Drükken im Bereich von 1 bis 200, insbesondere 5 bis 50 bar mittels eines Ziegler-Katalysatorsystems aus

(1) einer Titan enthaltenden Katalysatorkomponente, aus

(1.1) einem gefällten Produkt, das erhalten worden ist beim Erzeugen einer Fällung in einer vorgelegten organischen Flüssigkeit durch Ein- und Zusammenbringen unter kräftiger Bewegung

(1.1.1) einer 0,1 bis 10, insbesondere 1 bis 2 molaren Lösung von Titantetrachlorid in einem flüssig vorliegenden, 5 bis 10, insbesondere 6 bis 8 Kohlenstoffatome aufweisenden Kohlenwasserstoff gesättigt-aliphatischer und/oder aromatischer Natur,

(1.1.2) einer 0,1 bis 10, insbesondere 1 bis 2 molaren Lösung einer aluminiumorganischen Verbindung der Summenformel $R_nAlCl_{3-n}$,

worin stehen n für eine Zahl im Bereich von 1,5 bis 3, insbesondere 1,5 bis 2 und R für eine Alkylgruppe, die 1 bis 12, insbesondere 2 bis 4 Kohlenstoffatome enthält, in einem flüssig vorliegenden, 5 bis 10, insbesondere 6 bis 8 Kohlenstoffatome aufweisenden Kohlenwasserstoff gesättigt-aliphatischer und/oder aromatischer Natur sowie

(1.1.3) eines $C_2$- bis $C_8$-, vorzugsweise $C_2$- bis $C_4$-alpha-Monoalkens, und insbesondere von Ethen, und

(2) einer Aluminium enthaltenden Katalysatorkomponente, die ein Trialkylaluminium ist, das pro Alkylgruppe 1 bis 12, insbesondere 2 bis 4 Kohlenstoffatome enthält, mit der Maßgabe, daß das Atomverhältnis Titan aus der Katalysatorkomponente (1) : Aluminium aus der Katalysatorkomponente (2) im Bereich von 1 : 1 bis 1 : 200, insbesondere 1 : 5 bis 1 : 20, liegt.

Das erfindungsgemäße Verfahren ist dadurch gekennzeichnet, daß als Titan enthaltende Katalysatorkomponente (1) eine solche eingesetzt wird, bei der

(1.1) das gefällte Produkt erzeugt worden ist bei Temperaturen im Bereich von -30 bis 30, insbesondere -10 bis 10° C in einer vorgelegten organischen Flüssigkeit, die bei der Fällungstemperatur eine Viskosität im Bereich von 1,5 bis 30, vorzugsweise 5 bis 15, und insbesondere 8 bis 12 mm²/s hat und aus (a) einem flüssig vorliegendem, 5 bis 10, insbesondere 6 bis 8 Kohlenstoffatome aufweisenden Kohlenwasserstoff gesättigt-aliphatischer und/oder aromatischer Natur sowie (b) darin gelösten relativ geringen Mengen eines Polymerisats eines $C_2$- bis $C_6$-, vorzugsweise $C_3$- bis $C_4$-alpha-Monoalkens, und insbesondere eines Homopolymerisats des iso-Butens, besteht, mit den Maßgaben, daß (i) pro g Mol des ingesamt eingesetzten Titantetrachlorids insgesamt 2 bis 20, insbesondere 3,5 bis 5 Liter der vorgelegten organischen Flüssigkeit, insgesamt 0,5 bis 5, insbesondere 1 bis 2 g Mol der aluminiumorganischen Verbindung sowie insgesamt 5 bis 500, insbesondere 20 bis 100 g Mol des alpha-Monoalkens eingesetzt werden, und (ii) pro Moleinheit des ingesamt eingesetzten Titantetrachlorids 0,002 bis 0,15, insbesondere 0,005 bis 0,02 Moleinheiten pro Minute in gefälltes Produkt übergeführt sowie 0,02 bis 1, insbesondere 0,15 bis 0,35 Moleinheiten pro Minute des alpha-Monoalkens in das Fällungssystem eingebracht werden; sowie

(1.2) das gemäß (1.1) erhaltene gefällte Produkt, das in einem flüssig vorliegendem, 5 bis 10, insbesondere 6 bis 8 Kohlenstoffatome aufweisenden Kohlenwasserstoff gesättigt-aliphatischer und/oder aromatischer Natur vorliegt, unter guter Durchmischung zusammengebracht worden ist mit einer 0,1 bis 10 insbesondere 1 bis 2 molaren Lösung einer lithiumorganischen Verbindung der Summenformel LiR, worin R steht für eine Alkylgruppe, die 1 bis 12, insbesondere 4 bis 6 Kohlenstoffatome enthält, in einem flüssig vorliegenden, 5 bis 10, insbesondere 6 bis 8 Kohlenstoffatome aufweisenden Kohlenwasserstoff gesättigt-aliphatischer und/oder aromatischer Natur, mit den Maßgaben, daß (i) das Zusammengebrachte bei Temperaturen im Bereich von -10 bis 60, insbesondere 10 bis 20° C über eine Zeitspanne von 0,5 bis 12, insbesondere 1 bis 3 Stunden belassen wird, und (ii) pro g Mol Titan in dem gefällten Produkt 0,1 bis 20, insbesondere 1 bis 5 g Mol der lithiumorganischen Verbindung eingesetzt werden; - wobei das dabei resultierende festphasige Produkt die Titan enthaltende Katalysatorkomponente (1) ist.

Beim Ansatz der erfindungsgemäß enthaltenen Titan enthaltenden Katalysatorkomponente (1) kann das Polymerisationsverfahren als solches in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder - vorzugsweise - Trockenphasen-Polymerisationsverfahren im gerührten oder gewirbelten Bett. Die erwähnten technologischen Ausgestaltungen - mit anderen Worten: die technologischen Varianten der Polymerisation von Olefinen nach Ziegler - sind aus der Literatur und Praxis wohlbekannt, so daß sich nähere Ausführungen zu ihnen erübrigen.

Zu bemerken ist hierzu noch, daß die neue Titan enthaltende Katalysatorkomponente (1) - wie entsprechende bekannte Katalysatorkomponenten - z.B. außerhalb oder innerhalb des Polymerisationsraumes mit der Katalysatorkomponente (2) zusammengebracht werden kann; im letztgenannten Fall etwa durch getrennten Eintrag der Komponenten, die im übrigen in Form einer Suspension (Katalysatorkomponente (1)) bzw. Lösung (Katalysatorkomponente (2) gehandhabt werden können.

Schließlich ist noch zu sagen, daß die neuen Katalysatorkomponenten (1) sich sowohl zum Herstellen von Homopolymerisaten des Ethens als auch zum Herstellen von Copolymerisaten des Ethens eignen und daß als Copolymerisationspartner neben Propen und Octen-1 vor allem Buten-1 und Hexen-1 in Betracht kommen. Die Regelung der Molekulargewichte der Polymerisate kann ein einschlägig üblicher Weise erfolgen, insbesondere mittels Wasserstoff als Regulans.

Zu der erfindungsgemäßen Titan enthaltenden Katalysatorkomponente (1) als solcher ist das folgende zu sagen:

Ihre Herstellung erfolgt in zwei Schritten, die oben und nachstehend mit (1.1) und (1.2) bezeichnet sind.

(1.1) Dieser Schritt besteht im Herstellen eines gefällten Produkts durch Erzeugen einer Fällung in einer vorgelegten organischen Flüssigkeit durch Ein- und Zusammenbringen unter kräftiger Bewegung - wobei man in der Praxis insbesondere an ein konstantes heftiges Rühren denken wird, da die Intensität des Rührens bekanntlich von Einfluß auf die Morphologie der betroffenen Katalysatorkomponente ist -

(1.1.1) einer - oben näher definierten - Lösung von Titantetrachlorid in einem flüssig vorliegenden Kohlenwasserstoff,

(1.1.2) einer - oben näher definierten - Lösung einer aluminiumorganischen Verbindung in einem flüssig vorliegenden Kohlenwasserstoff, sowie

(1.1.3) einem - oben näher definierten - alpha-Monoalken.

Diese Verfahrensweise als solche ist insoweit geläufiger Stand der Technik und kann vom Fachmann ohne Schwierigkeiten vollzogen werden; - womit sich nähere Darlegungen zu ihr erübrigen. Es ist allenfalls zur stofflichen Seite zu bemerken, daß sich im gegebenen Zusammenhang als flüssig vorliegender Kohlenwasserstoff für die Lösungen unter (1.1.1) sowie (1.1.2) besonders gut eignen n-Hexan, n-Heptan und n-Octan; geeignet sind aber auch z.B Toluol und Cyclohexan. Als aluminiumorganische Verbindung für die Lösung unter (1.1.2) sind speziell geeignet namentlich Diethylaluminiumchlorid und Aluminiumsesquichloride; es kann aber auch z.B. Trioctylaluminium eingesetzt werden. Seitens des alpha-Monoalkens unter (1.1.3) ist herausragend gut geeignet Ethen, gut geeignet Propen, 4-Methylpenten-1 und geeignet z.B. Buten-1 sowie Hexen-1.

In dem geschilderten, vorgegebenen Rahmen besteht die eine neue und erfindungsgemäße Besonderheit darin, daß die Fällung erzeugt wird bei Temperaturen im Bereich von -30 bis 30, insbesondere -10 bis 10°C in einer vorgelegten organischen Flüssigkeit, die bei der Fällungstemperatur eine Viskosität im Bereich von 1,5 bis 30, vorzugsweise 5 bis 15, und insbesondere 8 bis 12 $mm^2/s$ hat und aus (a) einem flüssig vorliegenden, 5 bis 10, insbesondere 6 bis 8 Kohlenstoffatome aufweisenden Kohlenwasserstoff gesättigt-aliphatischer und/oder aromatischer Natur sowie (b) darin gelösten relativ geringen Mengen eines Polymerisats eines $C_2$- bis $C_6$-, vorzugsweise $C_3$- bis $C_4$-alpha-Monoalkens, und insbesondere eines Homopolymerisats des iso-Butens, besteht, mit den Maßgaben, daß (i) pro g Mol des insgesamt eingesetzten Titantetrachlorids insgesamt 2 bis 20, insbesondere 3,5 bis 5 Liter der vorgelegten organischen Flüssigkeit, insgesamt 0,5 bis 5, insbesondere 1 bis 2 g Mol der aluminiumorganischen Verbindung sowie insgesamt 5 bis 500, insbesondere 20 bis 100 g Mol des alpha-Monoalkens eingesetzt werden, und (ii) pro Moleinheit des insgesamt eingesetzten Titantetrachlorids 0,002 bis 0,15, insbesondere 0,005 bis 0,02 Moleinheiten pro Minute in gefälltes Produkt übergeführt sowie 0,02 bis 1, insbesondere 0,15 bis 0,35 Moleinheiten pro Minute des alpha-Monoalkens in das Fällungssystem eingebracht werden.

Von erheblicher Bedeutung ist hierbei die vorgelegte organische Flüssigkeit, die (i) aus zwei Komponenten besteht, nämlich (a) dem flüssig vorliegenden Kohlenwasserstoff sowie (b) dem darin gelösten alpha-Monoalken-Polymerisat und die (ii) - bei der gewählten Fällungstemperatur - eine Viskosität im oben angegebenen Bereich haben muß; - wobei das Einstellen der jeweils gewünschten Viskosität in sehr einfacher Weise möglich ist über die gelöste Menge des gewählten alpha-Monoalken-Polymerisats. Je größer dessen Menge, je höher die Viskosität.

Zur stofflichen Seite der betroffenen, vorgelegten, organischen Flüssigkeit ist das folgende zu sagen:

Als flüssig vorliegender Kohlenwasserstoff sind besonders gut geeignet n-Hexan, n-Heptan und n-Octan; gut geeignet z.B. Toluol und Cyclohexan.

Zu den alpha-Monoalken-Polymerisaten ist generell zu sagen, daß es zweckmäßig ist, wenn diese Lösungsviskositäten (nach DIN 53 728/Blatt 4) von 100 bis 800, und insbesondere von 500 bis 700 $cm^3/g$ haben.

Als Individuen erfindungsgemäß geeigneter alpha-Monoalken--Polymerisate sind zu nennen an erster Stelle Hompolymerisate des iso-Butens, denen in der Eignung nachgeordnet ist, z.B. Poly-1-hexen.

Gemäß Schritt (1.1) hergestellte gefällte Produkte mit einem Titangehalt von 1,5 bis 4 Gewichtsprozent haben sich im Rahmen der Erfindung als besonders geeignet erwiesen.

(1.2) Dieser Schritt besteht im Umsetzen des gemäß Schritt (1.1) erhaltenen gefällten Produkts mit einer - oben näher definierten - lithiumorganischen Verbindung der Summenformel LiR.

Diese zweite erfindungsgemäße Besonderheit besteht im einzelnen darin, das gemäß (1.1) erhaltene gefällte Produkt, das in einem flüssig vorliegendem, 5 bis 10, insbesondere 6 bis 8 Kohlenstoffatome aufweisenden Kohlenwasserstoff gesättigt-aliphatischer und/oder aromatischer Natur vorliegt, unter guter Durchmischung zusammenzubringen mit einer 0,1 bis 10, insbesondere 1 bis 2 molaren Lösung einer lithiumorganischen Verbindung der Summenformel LiR, worin R steht für eine Alkylgruppe, die 1 bis 12, insbesondere 6 bis 8 Kohlenstoffatome enthält, in einem flüssig vorliegenden, 5 bis 10, insbesondere 6 bis 8 Kohlenstoffatome aufweisenden Kohlenwasserstoff gesättigt-aliphatischer und/oder aromatischer Natur, mit den Maßgaben, das (i) das Zusammengebrachte bei Temperaturen im Bereich von -10 bis 60, insbesondere 10 bis 20°C über eine Zeitspanne von 0,5 bis 12, insbesondere 1 bis 3 Stunden belassen wird, und (ii) pro g Mol Titan in dem gefällten Produkt 0,1 bis 20, insbesondere 1 bis 5 g Mol der lithiumorganischen Verbindung eingesetzt werden; - wobei das dabei resultierende festphasige Produkt die neue Titan enthaltende Katalysatorkomponente (1) ist.

Zur stofflichen Seite von Schritt (1.2) ist zu sagen, daß für den flüssig vorliegenden Kohlenwasserstoff das nämliche gilt wie bei Schritt (1.1) und daß das bevorzugte Lithiumalkyl n-Butyllithium ist.

Als Aluminium enthaltende Katalysatorkomponente (2) der erfindungsgemäß einzusetzenden Ziegler-Katalysatorsystems kommen die einschlägig üblichen Trialkyl-Aluminium-Verbindungen in Betracht; sie sind aus Literatur und Praxis so wohlbekannt, daß auf sie nicht näher eingegangen zu werden braucht. Als herausragende Vertreter seien beispielsweise genannt Triethylaluminium, Tri-isobutylaluminium und Tri-n-butylaluminium.

Abschließend ist noch zu bemerken, daß die erfindungsgemäßen Titan enthaltenden Katalysatorkomponenten (1) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z.B. Feuchtigkeitsausschluß, Inertgasatmosphäre).

Beispiel

Herstellen der Titan enthaltenden Katalysatorkomponente (1)

Schritt (1.1)

Es wird eine Fällung erzeugt in einer vorgelegten organischen Flüssigkeit durch Ein- und Zusammenbringen unter kräftiger Bewegung mittels konstantem Rühren

(1.1.1) einer 1,5 molaren Lösung von Titantetrachlorid in n-Heptan

(1.1.2) einer 1,5 molaren Lösung einer aluminiumorganischen Verbindung der Summenformel $R_nAlCl_{3-n}$, worin stehen n für die Zahl 2 und R für eine Ethylgruppe, in n-Heptan sowie

(1.1.3) von Ethen.

Erfindungsgemäß wird dabei im einzelnen so verfahren, daß die Fällung erzeugt wird, bei einer Temperatur von 0°C in einer vorgelegten organischen Flüssigkeit, die bei der Fällungstemperatur eine Viskosität von 11 mm²/s hat und aus (a) n-Heptan (100 Gew.-Teile) sowie (b) darin gelösten relativ geringen Mengen (0,9 Gew.-Teile) eines Homopolymerisats des iso-Butens, welches eine Lösungsviskosität (nach DIN 53 728/Blatt 4) von 600 cm³/g hat, besteht, mit den Maßgaben, daß (i) pro g Mol des ingesamt eingesetzten Titantetrachlorids, insgesamt 4 Liter der vorgelegten organischen Flüssigkeit, insgesamt 2 g Mol der aluminiumorganischen Verbindung sowie insgesamt 60 g Mol Ethen eingesetzt werden, und (ii) pro Moleinheit des insgesamt eingesetzten Titantetrachlorids 0,008 Moleinheiten pro Minute in gefälltes Produkt übergeführt sowie 0,15 Moleinheiten pro Minute des Ethens in das Fällungssystem eingebracht werden.

Die dabei entstehende Suspension wird bei Raumtemperatur auf eine Fritte überführt, mehrmals mit n-Heptan gewaschen und getrocknet. Man erhält so ein gefälltes Produkt, dessen Titangehalt 2,4 Gew.-% beträgt.

Schritt (1.2)

Das gemäß (1.1) erhaltene gefällte Produkt wird in n-Hexan suspendiert (Gewichtsverhältnis 1: 4) und unter guter Durchmischung mittels Rühren zusammengebracht mit einer 1,6 molaren Lösung von n-Butyllithium in n-Hexan, mit den Maßgaben, daß (i) das Zusammengebrachte bei Temperaturen im Bereich von 22 bis 28°C über eine Zeitspanne von 3 Stunden belassen wird, und (ii) pro g Mol Titan in dem gefällten Produkt 2 g Mol der lithiumorganischen Verbindung eingesetzt werden; - wobei das dabei resultierende festphasige Produkt die Titan enthaltende Katalysatorkomponente (1) ist.

Zur Isolierung der Katalysatorkomponente (1) wird sie von der flüssigen Phase auf einer Fritte getrennt, mehrmals mit n-Hexan gewaschen und getrocknet; ihr Titangehalt beträgt 2,3 Gew.-%.

Polymerisation mittels vorstehend beschriebener Katalysatorkomponente (1)

Die Polymerisation wird kontinuierlich durchgeführt in einem zylindrischen Polymerisationsreaktor, der ein Volumen von 1.500 1 und ein Verhältnis von Höhe : Durchmesser von 2,1 : 1,0 hat, einen Wendelrührer aufweist und während der Polymerisation im kontinuierlich-stationären Zustand zu 5/7 seiner Höhe mit kleinteiligem Polymerisat als Polymerisationsmedium gefüllt ist.

Im einzelnen ist das Polymerisationsverfahren so ausgestaltet, daß das Polymerisationsmedium ein zentrisches Rührbett aus kleinteiligem Polymerisat ist, mit den Maßgaben, daß

$(b_1)$ das Polymerisationsmedium im peripheren Bereich des Rührbetts nach oben und im zentralen Bereich des Rührbetts nach unten bewegt wird, derart, daß im Rührbett eine Froudezahl von 2,67 gegeben ist, und

$(b_2)$ im Polymerisationsmedium die Abfuhr der Polymerisationswärme im wesentlichen durch Entspannungskühlung erfolgt, derart, daß man

$(b_{2.1})$ das zu polymerisierende Monomere außerhalb des Reaktionsraumes auf eine Temperatur, die 90°C unter der Temperatur im Reakationsmedium liegt, sowie einen Druck, der 45 bar über dem Druck im Reaktionsmedium liegt, bringt,

$(b_{2.2})$ dieses Gemisch in überschüssiger Menge in das Rührbett entspannt,

$(b_{2.3})$ den nicht durch Polymerisation verbrauchten Rest (= etwa 80 %) des Monomeren aus dem Reaktionsraum abzieht, und

$(b_{2.4})$ diesen Rest nach Ersetzen des durch Polymerisation verbrauchten Monomeren sowie nach Wiederherstellen der für $(b_{2.1})$ gewählten Bedingungen der Temperatur und des Druckes im Kreislauf erneut in das Rührbett entspannt.

Unter diesen Bedingungen wird bei einem konstant gehaltenem Druck im Reaktor von 35 bar mittels intermittierender Zugabe von 3 g/Stunde der oben beschriebenen Katalysatorkomponente (1) sowie 6 g/Stunde Triisobutylaluminium als Katalysatorkomponente (2) ($\triangleq$ einem Atomverhältnis Ti : Al von 1 : 18) Ethen bei einer Temperatur von 100°C in Abwesenheit flüssiger Verdünnungsmittel polymerisiert.

Auf diese Weise entstehen im kontinuierlich-stationären Betrieb stündlich 50 kg grießförmiges Polyethen, das aus dem Reaktor ausgeschleust wird.

Nähere Angaben zur Morphologie dieses Polyethens finden sich in der nachstehenden Tabelle.

Vergleichsversuch

Es wird in Identität zum Beispiel gearbeitet, mit dem Unterschied, daß nicht die erfindungsgemäße Katalysatorkomponente (1) eingesetzt wird, sondern stattdessen die gleiche molare Menge (bezogen auf Titan) des gemäß Schritt (1.1) erhaltenen gefällten Produkts unter Wegfall der Stufe (1.2).

Auf diese Weise entstehen stündlich 45 kg grießförmiges Polyethen.

Nähere Angaben zur Morphologie dieses Polyethens finden sich ebenfalls in der nachstehenden Tabelle.

Tabelle zur Siebanalyse:

| | Korngröße [mm] | | | | | |
|---|---|---|---|---|---|---|
| | < 0,125 | 0,125-0,250 | 0,250-0,5 | 0,5-1,0 | 1,0-2,0 | > 2,0 [Gew.-%] |
| Beispiel | 0 | 0,9 | 61,4 | 35,2 | 1,7 | 0,8 |
| Vergl.Vers. | 0,2 | 3,9 | 41,8 | 28,8 | 13,5 | 1,8 |

Die Tabelle zeigt, daß beim erfindungsgemäßen Beispiel sowohl der Feinstanteil als auch das Grobkorn des Polymerisates gegenüber dem Vergleichsversuch deutlich verringert sind und dadurch der Anteil des Produktes im angestrebten Korngrößenbereich (0,25 - 1 mm) 70,6 auf 96,6 Gew.-% erhöht ist.

**Patentansprüche**

1. Verfahren zum Herstellen kleinteiliger Homopolymerisate des Ethens oder Copolymerisate des Ethens mit untergeordneten Mengen $C_3$- bis $C_8$-alpha-Monoalken durch Polymerisation des bzw. der Monomeren bei Temperaturen im Bereich von 30 bis 150 °C und Drücken im Bereich von 1 bis 200 bar mittels eines Ziegler--Katalysatorsystems aus

(1) einer Titan enthaltenden Katalysatorkomponente aus

(1.1) einem gefällten Produkt, das erhalten worden ist beim Erzeugen einer Fällung in einer vorgelegten organischen Flüssigkeit durch Ein- und Zusammenbringen unter kräftiger Bewegung

(1.1.1) einer 0,1 bis 10 molaren Lösung von Titantetrachlorid in einem flüssig vorliegenden, 5 bis 10 Kohlenstoffatome aufweisenden Kohlenwasserstoff gesättigt-aliphatischer und/oder aromatischer Natur,

(1.1.2) einer 0,1 bis 10 molaren Lösung einer aluminiumorganischen Verbindung der Summenformel $R_nAlCl_{3-n}$, worin stehen n für eine Zahl im Bereich von 1,5 bis 3 und R für eine Alkylgruppe, die 1 bis 12 Kohlenstoffatome enthält, in einem flüssig vorliegenden, 5 bis 10 Kohlenstoffatome aufweisenden Kohlenwasserstoff gesättigt-aliphatischer und/oder aromatischer Natur sowie

(1.1.3) eines $C_2$- bis $C_8$-alpha-Monoalkens und

(2) einer Alumnium enthaltenden Katalysatorkomponente, die ein Trialkylaluminium ist, das pro Alkylgruppe 1 bis 12 Kohlenstoffatome enthält,

mit der Maßgabe, daß das Atomverhältnis Titan aus der Katalysatorkomponente (1) : Aluminium aus der Katalysatorkomponente (2) im Bereich von 1 : 1 bis 1 : 200 liegt, dadurch gekennzeichnet, daß als titan enthaltende Katalysatorkomponente (1) eine solche eingesetzt wird, bei der

(1.1) Das gefällte Produkt erzeugt worden ist bei Temperaturen im Bereich von -30 bis 30 °C in einer vorgelegten organischen Flüssigkeit, die bei der Fällungstemperatur eine Viskosität im Bereich von 1,5 bis 30 $mm^2/s$ hat und aus (a) einem flüssig vorliegendem, 5 bis 10 Kohlenstoffatome aufweisenden Kohlenwasserstoff gesättigt-aliphatischer und/oder aromatischer Natur sowie (b) darin gelösten relativ geringen Mengen eines Polymerisats eines $C_2$- bis $C_6$-alpha-Monoalkens besteht, mit den Maßgaben, daß (i) pro g Mol des ingesamt eingesetzten Titantetrachlorids insgesamt 2 bis 20 Liter der vorgelegten organischen Flüssigkeit, insgesamt 0,5 bis 5 g Mol der aluminiumorganischen Verbindung sowie insgesamt 5 bis 500 g Mol des alpha-Monoalkens eingesetzt werden, und (ii) pro Moleinheit des insgesamt eingesetzten Titantetrachlorids 0,002 bis 0,15 Moleinheiten pro Minute in gefälltes Produkt übergeführt sowie 0,02 bis 1 Moleinheiten pro Minute des alpha-Monoalkens in das Fällungssystem eingebracht werden, sowie

(1.2) das gemäß (1.1) erhaltene gefällte Produkt, das in einem flüssig vorliegenden, 5 bis 10 Kohlenstoffatome aufweisenden Kohlenwasserstoff gesättigt-aliphatischer und/oder aromatischer Natur vorliegt, unter guter Durchmischung zusammengebracht worden ist mit einer 0,1 bis 10 molaren Lösung einer lithiumorganischen Verbindung der Summenformel LiR, worin R steht für eine Alkylgruppe, die 1 bis 12 Kohlenstoffatome enthält, in einem flüssig vorliegenden, 5 bis 10 Kohlenstoffatome aufweisenden Kohlenwasserstoff gesättigt-aliphatischer und/oder aromatischer Natur, mit den Maßgaben, daß (i) das Zusammengebrachte bei Temperaturen im Bereich von -10 bis 60°C über eine Zeitspanne von 0,5 bis 12 Stunden belassen wird, und (ii) pro g Mol Titan in dem gefällten Produkt 0,1 bis 20 g Mol der lithiumorganischen Verbindung eingesetzt werden; - wobei das dabei resultierende festphasige Produkt die Titan enthaltende Katalysatorkomponente (1) ist.

2. Verfahren gemäß Patentanspruch 1, dadurch gekennzeichnet, daß es als Trockenphasen-Polymerisationsverfahren durchgeführt wird.

**Claims**

1. A process for the preparation of finely divided homopolymers of ethene or copolymers of ethene with minor amounts of a $C_3$-$C_8$-alpha-monoalkene by polymerization of the monomer or monomers at from 30 to 150°C under from 1 to 200 bar using a Ziegler catalyst system consisting of

   (1) a titanium-containing catalyst component comprising (1.1) a precipitated product which has been obtained in producing a precipitate in an initially taken organic liquid by introducing and combining, with vigorous movement,

      (1.1.1) a 0.1-10 molar solution of titanium tetrachloride in a liquid saturated aliphatic and/or aromatic hydrocarbon of 5 to 10 carbon atoms,

      (1.1.2) a 0.1-10 molar solution of an organoaluminum compound of the empirical formula $R_nAlCl_{3-n}$, where n is from 1.5 to 3 and R is alkyl of 1 to 12 carbon atoms, in a liquid saturated aliphatic and/or aromatic hydrocarbon of 5 to 10 carbon atoms, and

      (1.1.3) a $C_2$-$C_8$-alpha-monoalkene, and

   (2) an aluminium-containing catalyst component which is a trialkylaluminum which contains 1 to 12 carbon atoms per alkyl group,

with the proviso that the atomic ratio of titanium from the catalyst component (1) to aluminum from the catalyst component (2) is from 1:1 to 1:200, wherein the titanium-containing catalyst component (1) used is one in which (1.1) the precipitated product has been produced at from -30 to 30°C in an initially taken organic liquid which has a viscosity of from 1.5 to 30 $mm^2$/s at the precipitation temperature and consists of (a) a liquid saturated aliphatic and/or aromatic hydrocarbon of 5 to 10 carbon atoms and

(b) relatively small amounts, dissolved therein, of a polymer of a $C_2$-$C_6$-alpha-monoalkene, with the provisos that

(i) a total of from 2 to 20 liters of the initially taken organic liquid, a total of from 0.5 to 5 g mol of the organoaluminum compound and a total of from 5 to 500 g mol of the alpha-monoalkene are used per g mol of the titanium tetrachloride employed in total, and (ii) per molar unit of the titanium tetrachloride employed in total, from 0.002 to 0.15 molar unit per minute is converted to precipitated product and from 0.02 to 1 molar unit per minute of the alpha-monoalkene is introduced into the precipitation system, and

(1.2) the precipitated product obtained according to (1.1), which is present in a liquid saturated aliphatic and/or aromatic hydrocarbon of 5 to 10 carbon atoms, is combined, with thorough mixing, with a 0.1-10 molar solution of an organolithium compound of the empirical formula LiR, where R is alkyl of 1 to 12 carbon atoms, in a liquid saturated aliphatic and/or aromatic hydrocarbon of 5 to 10 carbon atoms, with the provisos that (i) the substances combined are left at from -10 to 60°C for from 0.5 to 12 hours and (ii) from 0.1 to 20 g mol of the organolithium compound are used per g mol of titanium in the precipitated product, the resulting solid-phase product being the titanium-containing catalyst component (1).

2. A process as claimed in claim 1, which is carried out as a dry-phase polymerization process.

## Revendications

1. Procédé de préparation d'homopolymères en grains de l'éthylène ou de copolymères en grains de l'éthylène avec de petites quantités d'α-monoalcène en $C_3$ à $C_8$, par polymérisation du ou des monomères à des températures dans la gamme de 30 à 150°C et sous des pressions dans la gamme de 1 à 200 bar au moyen d'un système catalytique de Ziegler constitué

(1) d'un composant de catalyseur contenant du titane composé

(1.1) d'un produit précipité qui a été obtenu en provoquant une précipitation dans un liquide organique préalablement mis en place, par introduction dans ce liquide et mélange sous agitation puissante

(1.1.1) d'une solution 0,1 à 10 molaire de tétrachlorure de titane dans un hydrocarbure de nature aliphatique saturée et/ou aromatique, se présentant à l'état liquide et contenant 5 à 10 atomes de carbone,

(1.1.2) d'une solution 0,1 à 10 molaire d'un composé organique de l'aluminium de formule globale $R_nAlCl_{3-n}$, dans laquelle n représente un nombre dans la gamme de 1,5 à 3 et R représente un groupe alkyle contentant 1 à 12 atomes de carbone, dans un hydrocarbure de nature aliphatique saturée et/ou de nature aromatique, se présentant à l'état liquide et contenant 5 à 10 atomes de carbone, ainsi que

(1.1.3) d'un α-monoalcène en $C_2$ - $C_8$ et

(2) d'un composant de catalyseur contenant de l'aluminium, qui est un trialkylaluminium contenant 1 à 12 atomes de carbone par groupe alkyle,

étant spécifié que le rapport atomique du titane du composant de catalyseur (1) à l'aluminium du composant de catalyseur (2) est compris entre 1 : 1 et 1 : 200, caractérise en ce que, comme composant de catalyseur (1) contenant du titane, on utilise un tel composant dans lequel

(1.1) le produit précipité a été obtenu à des températures comprises entre -30 et 30°C, dans un liquide organique préalablement mis en place, qui a, à la température de précipitation, une viscosité comprise entre 1,5 et 30 mm²/s et qui consiste (a) en un hydrocarbure de nature aliphatique saturée et/ou de nature aromatique, se présentant à l'état liquide et contenant 5 à 10 atomes de carbone, et (b) en des quantités relativement petites dissoutes dans cet hydrocarbure d'un polymère d'un α-monoalcène en $C_2$-$C_6$, étant spécifié que (i) par molécule-gramme de la totalité du tétrachlorure de titane mis en oeuvre, en tout 2 à 20 l du liquide organique préalablement mis en place, en tout 0,5 à 5 molécules-grammes du composé organique de l'aluminium ainsi qu'en tout 5 à 500 molécules-grammes de l'α-monoalcène sont mis en oeuvre, et que (ii), par unité molaire du tétrachlorure de titane en tout mis en oeuvre, 0,002 à 0,15 unité molaire est transformée par minute en produit précipité et 0,02 à 1 unité molaire de l'α-monoalcène est introduite par minute dans le système de précipitation, et

(1.2) le produit précipité obtenu suivant (1.1), qui est présent dans un hydrocarbure de nature aliphatique saturée et/ou de nature aromatique, se présentant à l'état liquide et contenant 5 à 10 atomes de carbone, a été mis en contact par un mélange intime sous bonne agitation avec une solution 0,1 à 10 molaire d'un composé organique du lithium de formule brute LiR, dans laquelle R représente un groupe alkyle contenant 1 à 12 atomes de carbone, dans un hydrocarbure de nature aliphatique saturée et/ou de nature atomatique, se présentant à l'état liquide et contenant 5 à 10 atomes de carbone, étant spécifié que (i) la mise en contact est poursuivie pendant un laps de temps de 0,5 à 12 h à des températures comprises entre -10 et 60°C et que (ii) par molécule-gramme de titane dans le produit précipité 0,1 à 20 molécules-grammes du composé organique du lithium sont mises en oeuvre; - le produit en phase solide résultant de ce mode opératoire étant le composant de catalyseur (1) contenant du titane.

2. Procédé suivant la revendication 1, caractérisé en ce qu'il est réalisé sous forme de procédé de polymérisation en phase sèche.